Europäisches Patentamt

European Patent Office

Office européen des brevets

(19)

(11) Publication number: **0 079 754**
**A2**

## (12) EUROPEAN PATENT APPLICATION

(21) Application number: **82305981.1**

(22) Date of filing: **10.11.82**

(51) Int. Cl.³: **B 23 P 1/04**
**C 25 F 3/14**

(30) Priority: **12.11.81 US 320804**

(43) Date of publication of application:
**25.05.83 Bulletin 83/21**

(84) Designated Contracting States:
**AT BE CH DE FR GB IT LI LU NL SE**

(71) Applicant: **W.R. GRACE & CO.**
**Grace Plaza 1114 Avenue of the Americas**
**New York New York 10036(US)**

(72) Inventor: **Dixon, George Douglass**
**483 Great Plain Avenue**
**Needham Massachusetts 02192(US)**

(74) Representative: **Lawrence, Peter Robin**
**Broughton et al,**
**Gill, Jennings & Every 53-64 Chancery Lane**
**London WC2A 1HN(GB)**

(54) **Masking agent for electrolytic machining.**

(57) During electrolytic machining of a workpiece part of the workpiece may be protected from machining by a composition that itself may be electrolytically machined during the machining and that may subsequently be removed and that comprises a liquid carrier, a polymeric material soluble in the carrier, an electrically conductive filler and water soluble salt.

EP 0 079 754 A2

60/2076/02                    1     W.R. GRACE & CO.

MASKING AGENT FOR ELECTROLYTIC MACHINING

This invention relates to methods of electrolytic machining and, in particular, to masking agents for
use in such methods.

Electrolytic machining methods have been
used for many years. Interest in the process is very
great due to the increasing difficulty in working modern
metals, particularly the aerospace high temperature alloys.
Conventional deformation methods of metal working have
encountered almost insurmountable problems in working
and shaping these alloys to desired configurations due
to their superior physical properties. Because electrolytic machining is not influenced by the physical strength
of the workpiece, it is eminently suitable for high-
temperature materials.

The essential elements of an electrolytic
system may be thought of as consisting of three
subsystems:

(1)     Mechanical - The anode (the workpiece),
        the cathode (inert electrode), and
        appropriate motion control;

(2)     Chemical - The electrolyte and its
        auxiliary equipment;

(3)     Electrical - Electrical energy and equipment for its distribution and control.

Direct current power, at about 5-20 volts,
is applied to the electrodes. The current may range
from 10-30,000 amperes.

The portion of the workpiece (the anode) that is immediately adjacent to the cathode is rapidly dissolved. Cathodes of special shapes may be used, in order to reproduce the same shape in the depression generated in the workpiece. The cathode may also be moved in the course of an operation, and by these means, as well as by the use of masking resists, shields, and "thiefs", complicated shapes may be machined.

The anode and cathode must contain sufficient metal to carry all of the current without heating. Sections carrying current should be of good fit and tightly joined. Protection by masking, or paint, wax, or a like barrier is used to prevent the electrolyte from getting into joints by capillary action.

A particular problem arises when the workpiece and the face that is to be electrolytically machined include channels or passages extending into the workpiece from that face that are to be protected from machining. If these channels or passages are left unmasked they may be enlarged during the electrolytic machining. If it is desired to avoid this by use of a masking agent, various difficulties may be encountered. The masking agent in the channels may interfere with the electrolytic machining of the face that is to be machined. It is difficult to introduce the masking agent into the channels and to remove it after machining, especially if the channels are very narrow, without at the same time incurring the risk of the masking agent being washed away by the electrolyte during machining.

A composition according to the invention and which is suitable for use as a masking agent for electrolytic machining comprises a liquid carrier, a polymeric material that is soluble in the carrier, an electrically conductive filler and a water soluble salt.

The invention includes a method in which a metal workpiece is electrolytically machined, preferably using aqueous sodium chloride electrolyte, while part of the article is protected from the machining by a non-flowing masking composition formed by application to the workpiece of the composition described above, the masking composition is electrolytically machined during the method, and after the electrolytic machining the composition is washed from the workpiece. Generally the workpiece has a face that is to be electrolytically machined and the part of the workpiece that is to be protected from the machining, and to which the masking composition is applied, is a channel or passage extending into the workpiece from that face.

The composition must be a non-flowing composition after it is applied to the part or parts that it is protect from the machining, but it must be removable by washing after machining.    Preferably the composition is one that forms a gel on standing.    The gel should resist removal by the electrolyte during machining but must be capable of being removed by washing after the machining.    To facilitate removal by washing it is desirable to use warm water that will both soften and remove the gel.

The liquid carrier is preferably aqueous and is preferably water, because of its compatibility with the electrolyte, which is generally a solution of sodium chloride in water. However the carrier may include a blend of water and organic liquids such as alcohols, ketones, aldehydes or esters in which the polymer may be dissolved prior to combination with water.

The conductive filler can be any metal. Suitable metals include stainless steel, iron, copper, aluminium, silver, nickel, zinc, and alloys of the foregoing.    The preferred metal for the conductive filler is nickel.    The conductive filler is preferably

4

in the form of a powder. The size of the metal filler particles, however, is not critical. Some metals may be undesirable under certain circumstances. A metal which has the potential to form an alloy with the part being machined could result in adversely affecting the performance of the machined part.

A polymer which is soluble in the liquid carrier is used to build body in the composition. It is preferred to employ a high molecular weight polymer to produce a high viscosity at low solids content. When the liquid carrier is water or a liquid whose major component is water, polymers that are water-soluble are preferred. Suitable water-soluble polymers include starch derivatives, natural gum derivatives, cellulose ethers, modified starches, acrylamide polymers, acrylic acid polymers, ethylene oxide polymers, methacrylic acid polymers, polyethylenimine polymers, polyvinyl alcohol polymers, and polyvinylpyrrolidone polymers. The preferred polymer is carboxymethylcellulose.

A water soluble salt is required to provide the liquid carrier with electrical conductivity, which should be similar to the conductivity of the electrolyte being used for the machining, generally brine. Sodium chloride is preferred.

Other ingredients may be added for the purpose of altering the resin rheology. The foremost of these ingredients are thixotropic agents and wetting agents. Thixotropic agents are inert additives, the sole function of which is to adjust the rheology of the fluid. Fumed silica is preferred but others that can be used include precipitated silica, clays, and organic salts. A preferred fumed silica is "Cab-O-Sil" (Trade mark) manufactured by Cabot Corporation. A preferred clay is bentonite.

A wetting agent may be used to increase the thixotropic action of the thixotropic agent. The wetting agent provides a higher degree of thixotrophy at a lower level of thixotropic agent. The wetting agents contemplated for the composition may be ionic or non-ionic. A suitable wetting agent is a fatty alcohol polyglycol ether. A preferred fatty alcohol polyglycol ether is "Eumulgin" 05, (trade mark) manufactured by Henkel Corporation.

To make the composition, the thixotropic agent, the salt, the wetting agent, the polymer, and the electrically conductive filler are added to the liquid carrier using high speed, high shear mixing. The resulting mixture is mixed at ambient temperature for approximately 15 minutes or longer. The resulting composition is a thixotropic material having a viscosity in the range of about 100,000 to about 4,000,000 cps, when measured on a Brookfield RVT heliopath viscometer with a TF spindle and a shear rate of 2.5 rpm.

The composition can be caused to flow easily into or onto the parts of the workpiece that are to be protected during the electrolytic machining of the remainder of the workpiece and will form a rigid gel on standing in or on these parts, and can be rendered fluid by flushing with warm water for removal from the parts after machining.

The following is an example of the invention.

A composition is formed from the following ingredients in the amounts indicated:

| Ingredient | Parts by Weight |
|---|---|
| Water | 45.704 |
| Carboxymethylcellulose (CMC 7HA, Hercules, Inc. Wilmington, Delaware) | 1.143 |
| Sodium Chloride | 1.142 |
| Wetting Agent (Eumulgin-05, Henkel, Corporation, Hoboken, New Jersey) | 0.183 |

Thixotropic Agent
(Cab-O-Sil M5, Cabot Corp.
Tuscola, Illinois)                    1.828

Nickel Powder
(NI-HCA-01, Novamat,
Wyckoff, New Jersey)                  50.0

Carboxymethylcellulose, sodium chloride, wetting agent, thixotropic agent, and the nickel powder are added to the water with high speed, high shear mixing. The mixture is mixed for approximately 15 minutes at room temperature (25°C). The resulting product has a viscosity of about $2.2 \times 10^6$ cps when measured on a Brookfield RVT heliopath viscometer with a TF spindle and a shear rate of 2.5 rpm.

The masking composition is tested in the electrolytic machining step in the manufacture of a turbine blade.

The turbine blade will contain passages for forced air cooling. The blade is constructed by laminating panels of a nickel alloy together. Each panel has narrow channels etched in the surface thereof and these channels are to form the passages in the finished blade.

If they are not masked, during electrolytic machining the electrolyte would enter these passages. The passages initially have a diameter on the order of 15 to 30 mils and machining would take place in the metal surface adjacent to the passages, thus altering the contours of the turbine blade.

Prior to the commencement of the electrolyte machining step, the masking composition is introduced into the passages of the turbine blade. The blade, which acts as the anode, is then inserted into the electrolyte solution. Meanwhile the masking composition is forming into a rigid gel. The turbine blade then undergoes the process of electrolytic machining. The electrolyte solution does not alter the contour of the masked passages, as the masking composition is etched away at the same rate as the alloy.

After the electrolytic machining operation
is completed, the blade is removed from the electrolyte.
The hardened gel composition remaining in the passage
is washed away with water, preferably warmed to about
65°C.  The water has the effect of dissolving the
hardened gel which allows the metal particles to be
flushed out of the channels or passages of the
machined part.

8

CLAIMS

1.        A composition suitable for use as a masking agent for electrolytic machining characterised in that it comprises a liquid carrier, a polymeric material soluble in the carrier, an electrically conductive filler and a water soluble salt.

2.        A composition according to claim 1 characterised in that the polymer is carboxymethylcellulose.

3.        A composition according to claim 1 or claim 2 characterised in that the liquid carrier is water.

4.        A composition according to any preceding claim characterised in that the electrically conductive filler is metal, preferably nickel.

5.        A composition according to any preceding claim characterised in that the salt is sodium chloride.

6.        A composition according to any preceding claim characterised in that it forms on standing a gel that is not removable by electrolyte during electrolytic machining but that can be removed by washing with warm water.

7.        A composition according to any preceding claim characterised in that it also includes a thixotropic agent, preferably fumed silica.

8.        A composition according to claim 7 characterised in that it also includes a wetting agent, preferably a fatty alcohol polyglycol ether.

9.        A composition according to any preceding claim characterised in that it comprises, by weight, 20 to 90% liquid carrier, 0.1 to 10% polymer, 10 to 80% electrically conductive filler, 1 to 10% water soluble
salt, 0 to 5%, preferably 0.5 to 5%, thixotropic
agent and 0 to 5% wetting agent.

10.        A method in which a metal workpiece is
electrolytically machined while part of the workpiece
is protected from the machining by a non-flowing masking
composition characterised in that the composition is
a composition according to any preceding claim, the
composition is electrolytically machined during the
method, and after the machining the composition is
washed from the article.

11.        A method according to claim 10 characterised
in that the workpiece has a face that is to be electrolytically machined and the part that is to be protected
is a channel or passage extending into the workpiece from
that face.